# EUROPEAN PATENT SPECIFICATION

(11) **EP 2 017 077 B1**
(45) Date of publication and mention of the grant of the patent: **12.09.2012**
(21) Application number: 08157673.8
(22) Date of filing: 05.06.2008
(51) Int. Cl.: B32B 38/04, B32B 3/12, B32B 37/14, F02C 7/045

(54) **Process for manufacturing a sound-absorbing panel for aircrafts**
Verfahren zur Herstellung einer schallabsorbierenden Platte für Flugzeuge
Procédé de fabrication d'un panneau d'absorption du son pour avions

(30) Priority: 18.07.2007 IT MI20071448
(43) Date of publication of application: 21.01.2009
(73) Proprietor: Alenia Aermacchi S.p.A., 21040 Venegono Superiore (VA) (IT)
(72) Inventor: Midali, Alberto, 21018 Sesto Calende (Varese) (IT); Aliverti, Mauro, 22069 Rovellasca (Como) (IT); Roccati, Mauro, 21100 Varese (IT); Ferrante, Pier Giorgio, 21100 Varese (IT)
(74) Representative: Coletti, Raimondo

(56) References cited:
- US-A- 4 254 171
- US-A- 4 759 513
- US-A1- 2005 147 790

## Description

The present invention refers to a process for manufacturing a sound-absorbing panel for aircrafts.

In particular, the present invention regards a process for manufacturing a sound-absorbing panel to be fixed on the structures of engine nacelles or other critical systems of aircrafts which require acoustic panels. For example, such panels can be installed inside the air inlets and bypass pipes of aircraft engine nacelles.

The acoustic panels are installed inside the engine nacelles for the reduction of the noise generated by the propulsion system. Such panels are designed to offer acoustic impedance closest possible to a calculated ideal value, in order to obtain the maximum reduction of noise possible. The ideal impedance varies depending on the spectrum of relevant noise level and the flow field in the air inlet pipe and thus depends of the operating state of the engine.

The acoustic panels currently used are made of a front permeable resistant layer (called facing sheet) stuck onto a honeycomb structure sealed by an impermeable back layer (called backing sheet).

Other types of panels on the market are also provided with other additional layers of resistant impermeable material and honeycomb structured material, thus generating multilayer panels. The facing sheet can be of the perforated, micro-perforated or linear type.

The perforated facing sheet comprises a sheet perforated with perforations of a defined diameter, spaced in a manner such to obtain the desired porosity. The acoustic resistance of this kind of facing sheets considerably depends on the Mach numbers of the oblique air flow and on the level of acoustic pressure. The sensitivity to the Mach number and the level of acoustic pressure reduces proportionally to the diameter of the holes, up to typical values of the linear facing sheets.

The linear facing sheets instead consist of a resistant network glued onto a high porosity surface (typically with an open area>30%). These structures have a relatively high resistance with respect to the relevant noise level. In addition, the sensitivity of the sheet resisting to the Mach number and level of major acoustic pressure is much lower than the one offered by the perforated upper sheets.

The manufacturing process for making perforated facing sheets made of composite carbon fibre material for pipes in the engine nacelles of the known type, require manufacturing through polymerisation of the sheet and thus its perforation.

Perforation of the sheet can be obtained by punching, mechanical perforation or laser perforation. Alternatively, perforation can be performed by sandblasting or through a mat with spikes.

The construction of the panel is performed both manufacturing the back sheet separately and then sticking the complete assembly (honeycomb facing sheet and backing sheet), or by co-curing the perforated honeycomb facing sheet and the back sheet.

In case additional resistant sheets are used, they are made and stuck onto adjacent honeycombs or, alternatively, such sheets can be inserted into each cell of the honeycomb.

The manufacturing process requires that the perforation of the facing panel occurs before the overall assembly of the same panel. In addition, the various components of the panel itself are polymerised separately in a furnace and in particular the facing sheet is polymerised separately in order to be able to proceed to its acoustic perforation in a more controlled manner. The overall standard process requires the following steps in succession:
1. Lamination of the facing sheet;
2. Polymerisation of the facing sheet;
3. Acoustic perforation of the facing sheet;
4. Lamination of the backing sheet;
5. Polymerisation of the backing sheet;
6. Lamination of the adhesive on the side of the facing sheet;
7. Reticulation of the adhesive;
8. Assembly of the honeycomb on the facing sheet;
9. Lamination of the adhesive on the side of the backing sheet ;
10. Assembly of the back layer on the honeycomb pair, facing sheet;
11. Polymerisation of the assembled panel;
12. Trimming the panel.

It is also known a method described in the patent US 4759513, wherein the panel is fixed to the aircraft portion, where it will be placed, before the step of polymerization of the panel.

With respect to the manufacturing process of the abovementioned panels, the present invention reduces the number cycles in autoclave required to manufacture the facing sheet and the backing sheet, thus leading to a substantial reduction of time regarding the manufacturing cycle periods.

The invention comprises co-curing of an entirely assembled acoustic panel.

An aspect of the present invention regards a manufacturing process of a sound-absorbing panel for aircrafts according the characteristics of claim 1 attached.

Further characteristics of the process are described in the dependent claims attached.

Further objectives and advantages of the present invention shall be clear from the subsequent description and the drawings attached, provided solely for exemplifying and non-limiting purposes, wherein:

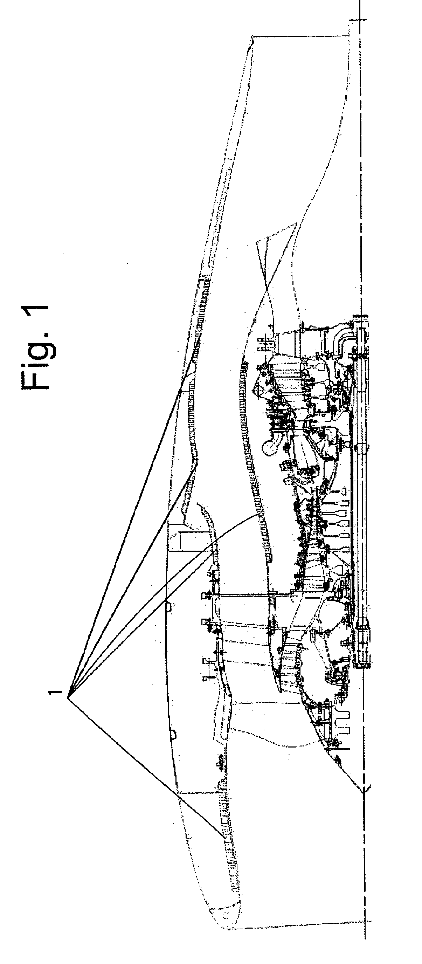

- Figure 1 illustrates a portion of an engine nacelle of an aircraft bearing sound-absorbing panels made according to the method of the present invention;

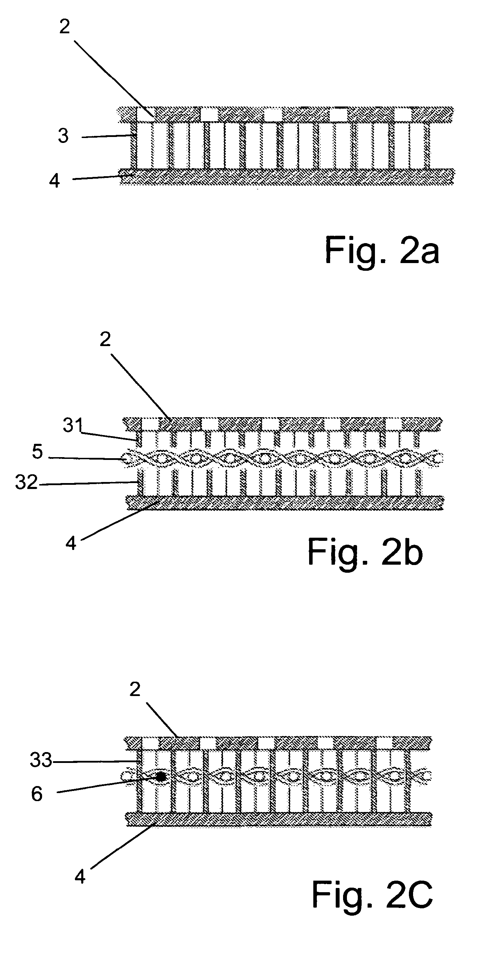

- Figure 2a illustrates a first embodiment of the sound-absorbing panel manufactured according to the method of the present invention;
- Figure 2b illustrates a second embodiment of the sound-absorbing panel manufactured according to the method of the present invention
- Figure 2c illustrates a third embodiment of the sound-absorbing panel manufactured according to the method of the present invention.

With reference to the abovementioned figures, the illustrated sound-absorbing panel 1 comprises a perforated facing sheet 2, an intermediate sheet 3 including a honeycomb structure and an impermeable backing sheet 4.

In addition, such panel can comprise, in the intermediate sheet, at least a porous septum 5 stuck between two adjacent honeycomb structures 31 and 32.

In another embodiment, a porous septum 6 is inserted directly into the cells of a single honeycomb structure 33.

The manufacturing process according to the present invention which leads to the manufacture of the aforementioned panels basically provides for the following steps:
1. Lamination of the facing sheet made of plastic material;
2. Lamination of an adhesive sheet positioned on the facing sheet;
3. Assembly of the honeycomb intermediate sheet on the facing sheet;
4. Lamination of an adhesive sheet;
5. Lamination of the backing sheet made of plastic material;
6. Polymerisation of the assembled panel;
7. Acoustic perforation of the facing sheet;
8. Trimming the panel.

The facing sheet of the panel is preferably made of composite material, typically but not necessarily made of an epoxy resin matrix with reinforcement in carbon fibre. A finishing layer can be added as the first lamination sheet.

The backing face of the panel is preferably made of composite material, typically but not necessarily made of an epoxy resin matrix with reinforcement in carbon fibre.

The adhesive which associates the facing sheet and the backing sheet to the honeycomb-type intermediate sheet is preferably an adhesive, typically but not necessarily epoxy-based. With some types of composite material the resin film can be omitted.

Thus the complete facing sheet of the panel is perforated mechanically by means of single or multiple head drilling spindle.

A layer covering the exposed surface of the acoustic panel using a surface finishing film can be provided to increase the resistance of the facing sheet of the perforated type under the environmental conditions at which the engine nacelle is intended to fly.

Depending on the percentage of the open area of the facing panel and on the width of the honeycomb cells, there is a limited possibility of penetration of the drilling tool into the walls of the honeycomb.

The penetration is controlled limiting the operation depth of the drilling tool. This limit is defined and ensures acoustic and structural features of the panel in compliance with the respective requirements.

## Claims

1. Process for manufacturing a sound-absorbing composite panel comprising in sequence the following steps:
a) lamination of a front sheet;
b) assembly of an intermediate honeycomb sheet on the front sheet;
c) lamination of a back sheet,
d) polymerization of such assembled panel, by co-curing the entirely assembled composite panel;
e) acoustic perforation of the front sheet,
f) trimming of the assembled panel,
g) fix the panel to a portion of the aircraft;

2. Process according to claim 1 can further comprise the step of sticking a surface finishing film on such perforated front sheet.

3. Process according to claim 1, further comprising the step of lamination of an adhesive sheet positioned between honeycomb and back sheet.

4. Process according to claim 1, further comprising lamination of an adhesive sheet positioned on the front sheet.

5. Process according to claim 1, further comprising the steps of lamination of an adhesive sheet positioned between honeycomb and back sheet and of an adhesive sheet positioned on the front sheet.

## Patentansprüche

1. Verfahren zum Herstellen einer schalldämmenden Verbundplatte, umfassend nacheinander die folgenden Schritte:
a) Laminieren einer vorderen Schicht;
b) Anbringen einer Waben-Zwischenschicht an der vorderen Schicht;
c) Laminieren einer hinteren Schicht;
d) Polymerisierten einer derartigen zusammengesetzten Platte durch "Co-Curing" der vollständig zusammengesetzten Verbundplatte;
e) Akustikperforation der vorderen Schicht;
f) Zuschneiden der zusammengesetzten Platte;
g) Befestigern der Platte an einem Abschnitt des Flugzeugs.

2. Verfahren nach Anspruch 1, welches ferner den Schritt des Klebens eines Oberflächenveredelungsfilms auf eine derartige perforierte vordere Schicht umfassen kann.

3. Verfahren nach Anspruch 1, ferner umfassend den Schritt des Laminierens einer Klebeschicht, die zwischen der Wabenschicht und der hinteren Schicht angeordnet wird.

4. Verfahren nach Anspruch 1, ferner umfassend das Laminieren einer Klebeschicht, die an der vorderen Schicht angeordnet wird.

5. Verfahren nach Anspruch 1, ferner umfassend die Schritte des Laminierens einer Klebeschicht, die zwischen der Wabenschicht und der hinteren Schicht angeordnet wird, und einer Klebeschicht, die an der vorderen Schicht angeordnet wird.

## Revendications

1. Procédé de fabrication d'un panneau composite absorbant le son comprenant dans l'ordre les étapes suivantes :
a) stratification d'une feuille avant ;
b) assemblage d'une feuille en nid d'abeilles sur la feuille avant ;
c) stratification d'une feuille arrière,
d) polymérisation d'un tel panneau assemblé, par co-durcissement du panneau composite entièrement assemblé ;
e) perforation acoustique de la feuille avant,
f) ébarbage du panneau assemblé,
g) fixation du panneau à une portion de l'aéronef.

2. Procédé selon la revendication 1, pouvant en outre comprendre l'étape de collage d'un film de fini en surface sur une telle feuille avant perforée.

3. Procédé selon la revendication 1, comprenant en outre l'étape de stratification d'une feuille adhésive positionnée entre les feuilles en nid d'abeilles et arrière.

4. Procédé selon la revendication 1, comprenant en outre la stratification d'une feuille adhésive positionnée sur la feuille avant.

5. Procédé selon la revendication 1, comprenant en outre les étapes de stratification d'une feuille adhésive positionnée entre les feuilles en nid d'abeilles et arrière et d'une feuille adhésive positionnée sur la feuille avant.
